# FASCICULE DE BREVET EUROPEEN

(11) **EP 3 937 354 B1**
(45) Date de publication et mention de la délivrance du brevet: **03.09.2025**
(21) Numéro de dépôt: 21183898.2
(22) Date de dépôt: 06.07.2021
(51) Int. Cl.: H02K 5/20, H02K 9/16, H02K 9/06, H02K 5/18

(54) **MOTEUR ÉLECTRIQUE POUR VÉHICULE ET VÉHICULE, NOTAMMENT FERROVIAIRE, ASSOCIÉ**
ELEKTROMOTOR FÜR FAHRZEUG UND ENTSPRECHENDES FAHRZEUG, INSBESONDERE SCHIENENFAHRZEUG
ELECTRIC MOTOR FOR A VEHICLE AND ASSOCIATED VEHICLE, IN PARTICULAR A RAILWAY VEHICLE

(30) Priorité: 07.07.2020 FR 2007181
(43) Date de publication de la demande: 12.01.2022
(73) Titulaire: ALSTOM Holdings, 93400 Saint-Ouen-sur-Seine (FR)
(72) Inventeur: BISTAGNINO, Andrea, 93400 Saint Ouen (FR)
(74) Mandataire: Plasseraud IP

(56) Documents cités:
- CN-U- 210 225 124
- JP-A- H07 154 946
- US-A- 5 081 384

## Description

La présente invention concerne un moteur électrique pour véhicule, notamment pour véhicule ferroviaire, du type comprenant :
- un stator d'axe longitudinal, et, en périphérie du stator,
- un dispositif de refroidissement du moteur comportant un corps principal, le corps principal comportant une pluralité de passages d'air, chaque passage d'air étant orienté sensiblement parallèlement à l'axe longitudinal, chaque passage d'air définissant deux ouvertures de passage d'air dont une ouverture d'entrée d'air et une ouverture de sortie d'air.

L'invention s'applique particulièrement aux moteurs électriques dont la puissance est supérieure à 100 kW, et notamment aux moteurs électriques de véhicules ferroviaires automotrices.

Les moteurs électriques de véhicules tels que des véhicules ferroviaires développent une puissance élevée, typiquement supérieure à 100 kW, nécessaire au déplacement du véhicule.

Lors de leur fonctionnement, et du fait de la puissance élevée, ces moteurs électriques génèrent de la chaleur. Il est nécessaire, afin d'assurer la sécurité du fonctionnement du véhicule ferroviaire, de dissiper la chaleur générée par chaque moteur et d'éviter que les moteurs n'atteignent une température critique.

A cet effet, il est connu d'utiliser des moteurs comportant un dispositif de refroidissement disposé en périphérie du stator. Un tel dispositif de refroidissement comporte notamment une pluralité de passages d'air adaptés pour laisser circuler l'air et ainsi refroidir le moteur. Le dispositif de refroidissement, et plus particulièrement les passages d'air permettent le refroidissement du moteur et améliorent donc la sécurité du moteur.

CN 210 225 124 U divulgue un moteur électrique comprenant un dispositif de refroidissement.

Toutefois, un tel moteur ne donne pas entière satisfaction puisque l'écoulement de l'air est fortement turbulent à l'entrée et à la sortie du dispositif de refroidissement. Un tel écoulement turbulent génère du bruit et limite le débit d'air pouvant circuler dans les passages d'air, limitant les performances de refroidissement du dispositif de refroidissement.

Un but de l'invention est de proposer un moteur électrique dont les performances de refroidissement sont améliorées et dont la génération de bruit est faible pour une puissance donnée.

A cet effet, l'invention a pour objet un moteur électrique selon la revendication 1.

Suivant d'autres aspects avantageux de l'invention, le moteur électrique comporte l'une ou plusieurs des caractéristiques suivantes, prise(s) isolément ou suivant toute combinaison techniquement possible :
- l'anneau ou l'un des anneaux de conditionnement est un deuxième anneau de conditionnement, le deuxième anneau de conditionnement étant un anneau ajouré comprenant une extrémité libre ajourée et une extrémité de liaison ajourée, l'extrémité de liaison ajourée étant une extrémité de liaison avec le corps principal, des ajours du deuxième anneau de conditionnement étant disposés en regard d'une ouverture de chaque passage d'air et s'élargissant de l'extrémité de liaison ajourée à l'extrémité libre ajourée et dans lequel les ajours définissent la section de passage du flux d'air ;
- le deuxième anneau de conditionnement comprend un support ainsi qu'une pluralité de parois, le support ainsi que la pluralité de parois s'étendant entre l'extrémité de liaison ajourée et l'extrémité libre ajourée, chaque paroi faisant saillie du support selon une direction radiale par rapport à l'axe longitudinal et s'étendant selon la direction longitudinale, chaque paroi s'étendant entre deux ouvertures de passage d'air adjacentes, la pluralité de parois définissant les ajours ;
- une largeur de chaque paroi, mesurée selon un plan tangent à une face extérieure du support, est croissante selon la direction longitudinale depuis l'extrémité libre ajourée vers l'extrémité de liaison ajourée, chaque paroi faisant de préférence saillie du support sur une hauteur supérieure à la hauteur des passages d'air prise selon la direction radiale par rapport à l'axe longitudinal ;
- les passages d'air sont disposés sur un cylindre primitif d'axe longitudinal et dans lequel les passages d'air sont de section constante tout au long du corps principal ;
- le corps principal comprend au moins 4, de préférence au moins 12 passages d'air ;
- le rapport selon l'axe longitudinal de la longueur du corps principal sur la longueur de chaque anneau de conditionnement est compris entre 5 et 40 ; et
- le moteur comporte un ventilateur adapté pour déplacer l'air au travers du dispositif de refroidissement, en particulier le ventilateur étant fixé sur un arbre du moteur.

L'invention concerne en outre un moteur pour véhicule.

L'invention sera mieux comprise à la lecture de la description qui va suivre, donnée uniquement à titre d'exemple non limitatif et faite en se référant aux dessins sur lesquels :
[Fig 1] la figure 1 est une vue en perspective d'un moteur électrique pour véhicule selon l'invention,
[Fig 2] la figure 2 est une vue en perspective d'un premier détail du moteur électrique de la figure 1 sur lequel est visible un premier anneau de conditionnement, et
[Fig 3] la figure 3 est une vue en perspective d'un deuxième détail du moteur électrique de la figure 1, sur lequel est visible un deuxième anneau de conditionnement.

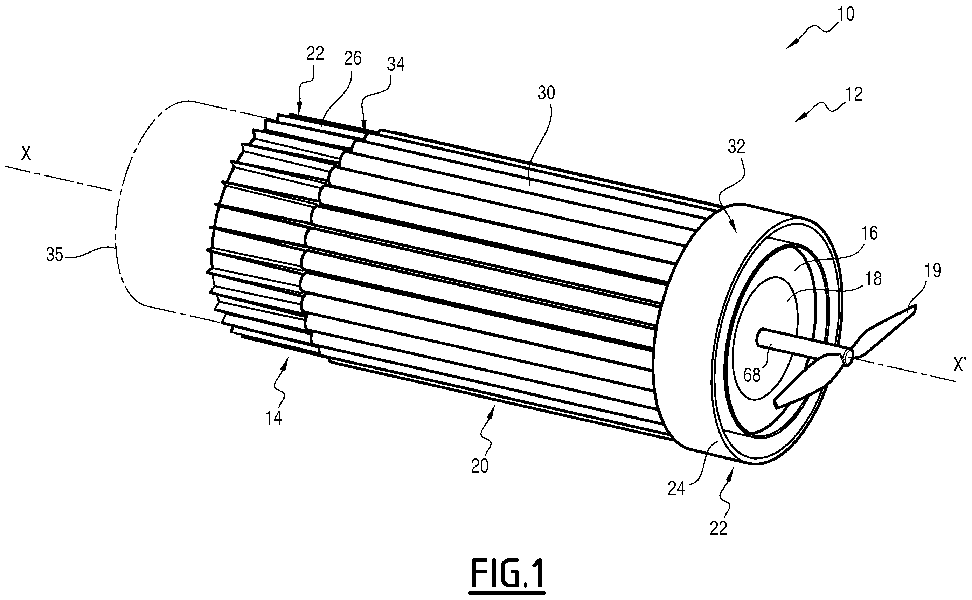

Un véhicule 10 comportant un moteur électrique 12 est illustré partiellement sur la figure 1.

Le véhicule 10 est de préférence un véhicule à propulsion électrique, de préférence encore un véhicule ferroviaire à propulsion électrique. En variante, le véhicule est un véhicule doté de moteurs électriques, alimentés par un système non-électrique, tel qu'un générateur thermique ou une pile à combustible.

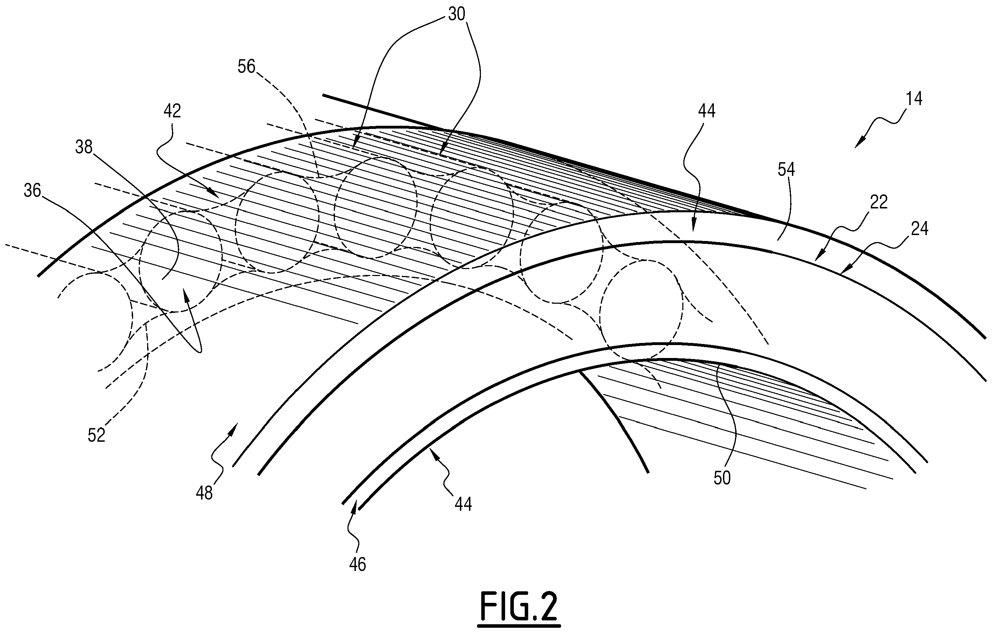

Le moteur électrique 12 illustré sur les figures 1 à 3 définit un axe central longitudinal X-X', comporte un dispositif de refroidissement 14 d'axe longitudinal X-X', et un stator 16 d'axe longitudinal X-X'. Le stator 16 est entouré du dispositif de refroidissement 14.

Les expressions « axialement » ; « radialement » ; « circonférentiellement » seront utilisées par la suite en référence à cet axe central.

Le moteur électrique 12 est muni d'un rotor 18 d'axe longitudinal X-X' et s'étendant à l'intérieur du stator 16.

Le moteur électrique 12 comporte avantageusement un carter non représenté, recouvrant le dispositif de refroidissement. Le moteur électrique 12 comporte avantageusement un ventilateur 19.

Le dispositif de refroidissement 14 comporte un corps principal 20 ainsi qu'un ou deux anneau(x) 22 de conditionnement d'un flux d'air. Dans le mode de réalisation présenté sur les figures 1 à 3, le dispositif de refroidissement 14 comporte un premier anneau de conditionnement 24 et un deuxième anneau de conditionnement 26.

Le corps principal 20 comporte un châssis 28 et une pluralité de passages d'air 30. Le corps principal 20 comporte au moins 4, de préférence au moins 12 passages d'air 30.

Le corps principal 20 s'étend selon l'axe longitudinal X-X' et définit une extrémité amont 32 ainsi qu'une extrémité aval 34, l'extrémité amont 32 et l'extrémité aval 34 s'étendant de préférence perpendiculairement à l'axe longitudinal X-X'. Les termes « amont » et « aval » sont définis selon le sens d'écoulement de l'air dans les passages d'air 30.

Le rapport selon l'axe longitudinal X-X' de la longueur du corps principal 20 sur la longueur de chaque anneau de conditionnement 22 est compris entre 5 et 40.

Le châssis 28 est fixé autour du stator 16. Le châssis 28 épouse avantageusement un contour extérieur du stator 16. Le châssis 28 est de préférence de forme cylindrique. Le châssis 28 est fixé à chacun des passages d'air 30.

Le châssis 28 est de préférence venu de matière avec les passages d'air 30. Dans le mode de réalisation présenté, le châssis 28 supporte sur une face extérieure chacun des passages d'air 30. En variante, les passages d'air 30 s'étendent dans le châssis 28, l'épaisseur du châssis 28 étant alors supérieur à la hauteur des passages d'air 30.

Chaque passage d'air 30 est orienté sensiblement parallèlement à l'axe longitudinal X-X'. Chaque passage d'air 30 est avantageusement disposé sur un cylindre primitif 35 d'axe longitudinal confondu avec l'axe longitudinal X-X', le cylindre primitif 35 étant par exemple défini par le châssis 28.

Chaque passage d'air 30 définit un sens de circulation d'air depuis l'extrémité amont 32 du corps principal 20 vers l'extrémité aval 34 du corps principal 20. Cette définition est valable quelle que soit la position relative du ventilateur 19 par rapport au corps principal 20 ; un ventilateur peut être choisi et placé de manière à entraîner l'air dans les passages d'air 30 dans l'une ou l'autre direction définies par l'axe longitudinal X-X'.

Chaque passage d'air 30 définit deux ouvertures de passage d'air 36. Chaque passage d'air 30 définit en particulier une ouverture d'entrée d'air 38 et une ouverture de sortie d'air 40. L'ouverture d'entrée d'air 38 de chaque passage d'air 30 s'étend par exemple sur l'extrémité amont 32 du corps principal 20. L'ouverture de sortie d'air 40 de chaque passage d'air 30 s'étend par exemple sur l'extrémité aval 34 du corps principal 20.

Chaque passage 30 d'air définit une section de passage d'air de préférence constante tout au long du corps principal 20. Dans le mode de réalisation présenté sur les figures 1 à 3, chaque passage d'air 30 est cylindrique, notamment à section circulaire, et chaque ouverture de passage d'air 36 est circulaire.

Chaque anneau 22 de conditionnement du flux d'air est placé en regard de l'ensemble des ouvertures d'entrée d'air 38 ou de sortie d'air 40. En d'autre termes, un anneau 22 respectif est soit placé en regard de l'ensemble des ouvertures d'entrée d'air 38, soit placé en regard de l'ensemble des ouvertures de sortie d'air 40.

Chaque anneau 22 a de préférence un axe longitudinal confondu avec l'axe longitudinal X-X' et comporte une extrémité de liaison 42 de l'anneau de conditionnement 22 avec le corps principal 20 ainsi qu'une extrémité libre 44, l'anneau 22 s'étendant selon l'axe longitudinal X-X' entre l'extrémité de liaison 42 et l'extrémité libre 44.

Chaque anneau 22 définit une section de passage du flux d'air croissante selon l'axe longitudinal X-X' depuis l'extrémité de liaison 42 de l'anneau de conditionnement 22 vers l'extrémité libre 44 de l'anneau de conditionnement 22. La surface de la section de passage est avantageusement croissante de façon continue depuis l'extrémité de liaison 42 vers l'extrémité libre 44. Ainsi, l'anneau de conditionnement 22 qui est placé en regard de l'ensemble des ouvertures d'entrée d'air 38, a une section de passage du flux d'air rétrécissante dans le sens d'écoulement d'air et l'anneau de conditionnement 22 qui est placé en regard de l'ensemble des ouvertures de sortie d'air 40, a une section de passage du flux d'air augmentant dans le sens d'écoulement d'air.

Selon une première variante, l'anneau 22 ou chaque anneau est un anneau distinct du corps principal 20 et adapté pour être fixé ou solidarisé au corps principal 20. En particulier, l'extrémité de liaison 42 est adaptée selon cette première variante pour être fixée sur le corps principal 20, par exemple sur l'extrémité amont 32 ou sur l'extrémité aval 34 du corps principal 20.

Selon une deuxième variante, l'anneau 22 est venu de matière avec le corps principal 20. En particulier, l'extrémité de liaison 42 est confondue avec le corps principal 20 dans cette deuxième variante. L'anneau de conditionnement 22 est alors dans la continuité du corps principal 20 et s'étend par exemple en regard de l'extrémité amont 32 ou de l'extrémité aval 34. L'anneau de conditionnement 22 se distingue du corps principal 20 en ce que la section de passage d'air varie dans l'anneau de conditionnement 22 selon l'axe longitudinal X-X. La jonction entre le corps principal 20 et l'anneau de conditionnement 22 selon cette deuxième variante est disposée selon l'axe longitudinal X-X' en la position longitudinale en laquelle la section de passage d'air commence à s'évaser.

Le premier anneau de conditionnement 24 est un anneau de conditionnement 22 selon l'une quelconque des variantes précédemment décrite.

Le premier anneau de conditionnement 24 comporte un tronçon radialement intérieur 46 et un tronçon radialement extérieur 48, le tronçon radialement intérieur 46 et le tronçon radialement extérieur 48 définissant entre eux une section de passage du flux d'air. Les deux tronçons radialement intérieur 46 et extérieur 48 sont axialement alignés.

Le tronçon radialement intérieur 46 comporte une extrémité libre lisse intérieure 50 ainsi qu'une extrémité de liaison ondulée intérieure 52. L'extrémité libre lisse intérieure 50 est par exemple circulaire ou cylindrique à section circulaire. La forme du tronçon radialement intérieur 46 évolue par exemple progressivement depuis l'extrémité libre lisse intérieure 50 vers l'extrémité de liaison ondulée intérieure 52, l'amplitude des ondulations augmentant par exemple en direction de l'extrémité de liaison ondulée intérieure 52. Les ondulations s'étendent circonférentiellement autour de l'axe longitudinal X-X'.

L'extrémité de liaison ondulée intérieure 52 définit, circonférentiellement autour de l'axe longitudinal X-X', un enchainement de creux et de pics d'ondulations, en référence à la distance à l'axe longitudinal X-X', l'enchainement étant par exemple régulier et fonction d'un angle autour de l'axe longitudinal X-X'.

L'extrémité de liaison ondulée intérieure 52 épouse partiellement une ouverture de passage d'air 36 de chaque passage d'air. Les creux d'ondulation de l'extrémité de la liaison ondulée intérieure 52 s'étendent en regard des ouvertures de passage d'air 36 et les pics d'ondulation de la liaison ondulée intérieure 52 s'étendent entre les ouvertures de passage d'air 36. L'extrémité de liaison ondulée intérieure 52 épouse partiellement les ouvertures d'entrée d'air 38 ou les ouvertures de sortie d'air 40.

Le tronçon radialement extérieur 48 comporte une extrémité libre lisse extérieure 54 ainsi qu'une extrémité de liaison ondulée extérieure 56. L'extrémité libre lisse extérieure 54 est par exemple circulaire ou cylindrique à section circulaire. La forme du tronçon radialement extérieure 48 évolue par exemple progressivement depuis l'extrémité libre lisse extérieure 54 vers l'extrémité de liaison ondulée extérieure 56, l'amplitude des ondulations augmentant par exemple en direction de l'extrémité de liaison ondulée extérieure 54. Les ondulations s'étendent circonférentiellement autour de l'axe longitudinal X-X'.

L'extrémité de liaison ondulée extérieure 54 définit, circonférentiellement autour de l'axe longitudinal X-X' un enchainement de creux et de pics d'ondulations, en référence à la distance à l'axe longitudinale X-X', l'enchainement étant par exemple régulier et fonction d'un angle autour de l'axe longitudinal X-X'.

L'extrémité de liaison ondulée extérieure 56 épouse partiellement une ouverture de passage d'air 36 de chaque passage d'air. Les creux d'ondulation de l'extrémité de la liaison ondulée extérieure 56 s'étendent entre les ouvertures d'air 36 et les pics d'ondulation de la liaison ondulée extérieure 56 s'étendent en regard des ouvertures d'air 36. L'extrémité de liaison ondulée extérieure 56 épouse partiellement les ouvertures d'entrée d'air 38 ou les ouvertures de sortie d'air 40.

Les ondulations du tronçon radialement extérieur 48 et les ondulations du tronçon radialement intérieur 46 sont alors en opposition de phase. Les creux des ondulations du tronçon radialement extérieur 48 font radialement face aux pics des ondulations du tronçon radialement intérieur 46 et les pics des ondulations du tronçon radialement extérieur 48 font radialement face aux creux des ondulations du tronçon radialement intérieur 46.

Ensemble, l'extrémité libre lisse intérieure 50 et l'extrémité libre lisse extérieure 54 forment une extrémité libre 44 telle que décrite précédemment.

Ensemble, l'extrémité de liaison ondulée intérieure 52 et l'extrémité de liaison ondulée extérieure 56 forment une extrémité de liaison 42 telle que décrite précédemment.

Dans le mode de réalisation illustré sur les figures 1 à 3, le premier anneau de conditionnement 24 est un anneau 22 adapté pour être fixé ou solidarisé au corps principal 20. En variante, le premier anneau de conditionnement 24 est un anneau de conditionnement 22 venu de matière avec le corps principal 20.

Dans le mode de réalisation illustré sur les figures 1 à 3, le premier anneau de conditionnement 24 est placé en regard de l'ensemble des ouvertures d'entrée d'air 38. En variante non représentée, le premier anneau de conditionnement 24 est placé en regard de l'ensemble des ouvertures de sortie d'air 40.

Le deuxième anneau de conditionnement 26 est un anneau 22 selon l'une quelconque des variantes précédemment décrites.

Le deuxième anneau de conditionnement 26 est un anneau ajouré comprenant un support 58 ainsi qu'une pluralité de parois 60. Le deuxième anneau de conditionnement 26 comprend une extrémité de liaison ajourée 62 et une extrémité libre ajourée 64, le support 58 ainsi que la pluralité de parois 60 s'étendant entre l'extrémité de liaison ajourée 62 et l'extrémité libre ajourée 64.

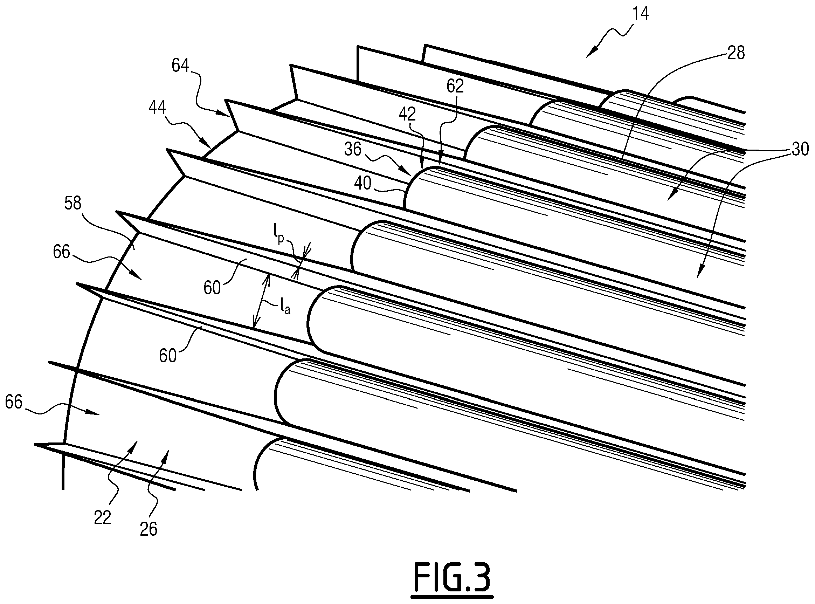

Le support 58 définit un axe longitudinal confondu avec l'axe longitudinal X-X'. Le support 58 s'étend dans la continuité du châssis 28. Comme visible sur la figure 3, le support 58 est de préférence cylindrique.

La pluralité de parois 60 s'étend sur une face extérieure du support 58. Chaque paroi 60 fait saillie du support 58 selon une direction radiale par rapport à l'axe longitudinal X-X'. Chaque paroi 60 fait de préférence saillie sur une hauteur supérieure à la hauteur des passages d'air 30 prise selon la direction radiale par rapport à l'axe longitudinal X-X'. Chaque paroi 60 s'étend selon la direction longitudinale X-X'. Une largeur lₚ de chaque paroi est mesurée selon un plan tangent à la face extérieure du support 58. La largeur lₚ de chaque paroi est croissante selon la direction longitudinale X-X' depuis l'extrémité libre ajourée 64 vers l'extrémité de liaison ajourée 62. La largeur lₚ de chaque paroi est alors plus faible à l'extrémité libre ajourée 64 qu'à l'extrémité de liaison ajourée 62.

Chaque paroi 60 s'étend entre deux ouvertures de passage d'air 36 adjacentes. La pluralité des parois 60 s'étend par exemple entre toutes les ouvertures d'entrée d'air 38 ou entre toutes les ouvertures de sortie d'air 40.

La pluralité de parois 60 définit une pluralité d'ajours 66, la pluralité d'ajours 66 s'étendant entre chaque paroi 60.

Les ajours 66 définissent la section de passage d'air, dans la continuité des passages d'air 36.

Chaque ajour 66 s'étend selon la direction longitudinale X-X', entre l'extrémité de liaison ajourée 62 et l'extrémité libre ajourée 64. Les ajours 66 sont disposés en regard de chaque ouverture de passage d'air 36. La pluralité d'ajours 66 est par exemple disposée en regard de toutes les ouvertures d'entrée d'air 38 ou de toutes les ouvertures de sortie d'air 40.

Une largeur lₐ de chaque ajour 66 est mesurée selon un plan tangent à la face extérieure du support 58. La largeur lₐ de chaque ajour 66 est croissante selon la direction longitudinale X-X' depuis l'extrémité de liaison ajourée 62 vers l'extrémité libre ajourée 64.

Dans le mode de réalisation illustré sur les figures 1 à 3, le deuxième anneau de conditionnement 26 est un anneau 22 venu de matière avec le corps principal 20.

Dans le mode de réalisation illustré sur les figures 1 à 3, le deuxième anneau de conditionnement 26 est placé en regard de l'ensemble des ouvertures de sortie d'air 30. En variante non représentée le deuxième anneau de conditionnement 26 est placé en regard de l'ensemble des ouvertures d'entrée d'air 38.

Le rotor 18 comporte un arbre moteur 68, l'arbre moteur 68 s'étendant avantageusement le long de l'axe longitudinal X-X'.

Le ventilateur 19 est avantageusement adapté pour être entrainé en rotation par l'arbre moteur 68.

Le ventilateur 19 est adapté pour déplacer l'air dans le sens de circulation d'air au travers du dispositif de refroidissement 14.

Le ventilateur 19 est par exemple fixé au rotor 18 et entrainé d'un seul bloc par l'arbre moteur 68. Le moteur 12 est alors un moteur autoventilé. En variante, le ventilateur 19 est entrainé séparément et indépendamment du rotor 18.

Le ventilateur 19 est par exemple un ventilateur axial.

Le ventilateur 19 est, selon une variante particulière (non représentée), un ventilateur radial. Le ventilateur 19 comporte alors un boitier définissant des déflecteurs ou des canaux propres à guider le flux d'air vers les passages d'air 30. Le boitier est alors par exemple connecté à un anneau de conditionnement 22 ou au carter.

Le carter recouvre avantageusement le dispositif de refroidissement 14 sur toute sa longueur selon l'axe longitudinal X-X'. L'intérieur du carter est par exemple de forme sensiblement cylindrique et recouvre l'ensemble du dispositif de refroidissement. Le carter forme par exemple un conduit définissant la section de passage d'air depuis le ventilateur 19 vers un anneau de conditionnement 22.

Le carter recouvre par exemple le deuxième anneau de conditionnement 22. Le carter s'étend par exemple sur les parois 60 et définit avec les parois 60 les ajours 66.

Le fonctionnement du moteur électrique 12 pour véhicule ci-dessus sera décrit par la suite.

Lorsque le moteur électrique 12 est alimenté en énergie électrique et qu'il fonctionne, le rotor 18 est en rotation par rapport au stator 16 et aux éléments solidarisés au stator 16, tels le dispositif de refroidissement 14 ou le carter.

Le rotor entraine en rotation le ventilateur 19, dont la forme déplace l'air environnant du moteur électrique 12 vers le dispositif de refroidissement. En particulier, le ventilateur déplace l'air dans le sens de circulation d'air au travers du dispositif 14 de refroidissement.

Lors de son entrée dans le dispositif de refroidissement 14, l'air traverse un anneau de conditionnement 22. En particulier, dans l'exemple représenté sur les figures 1 à 3, l'air traverse un premier anneau de conditionnement 24. La section de passage de l'air diminuant progressivement depuis l'extrémité libre 44 de l'anneau de conditionnement 22 vers l'extrémité de liaison 42 de l'anneau de conditionnement 22, l'écoulement de l'air le long de l'anneau de conditionnement 22 est sensiblement laminaire ou en tout cas moins turbulent que sans anneau de conditionnement 22.

La section de passage d'air en l'extrémité de liaison 42 étant plus proche de la section de l'ouverture d'entrée d'air 38 que la section de passage d'air en l'extrémité libre 44, les turbulences du flux d'air à l'entrée des passages d'air 30 sont limitées.

Lorsque l'air sort des passages d'air 30, l'air passe au traverse un anneau de conditionnement 22. En particulier, dans l'exemple représenté sur les figures 1 à 3, l'air traverse un deuxième anneau de conditionnement 26. La section de passage augmentant progressivement depuis l'extrémité de liaison 42 vers l'extrémité libre 44 de l'anneau de conditionnement 22. L'écoulement d'air le long de l'anneau de conditionnement 22 est alors sensiblement laminaire ou peu turbulent en sortant des passages d'air 30. En particulier, la section de passage d'air en l'extrémité de liaison 42 étant plus proche de la section de l'ouverture de sortie d'air 40 que la section de passage d'air en l'extrémité libre 44, les turbulences du flux d'air à la sortie des passages d'air 30 sont limitées.

Le flux d'air est de préférence déplacé par la différence de pression générée par le ventilateur 19, l'air captant de l'énergie calorifique du moteur électrique 12 tout au long de son trajet dans le dispositif de refroidissement 14, et dissipant cette énergie par la suite dans l'air ambiant.

Un moteur 12 comprenant un ou deux anneaux de conditionnement 22, chacun définissant une section de passage de l'air croissante selon l'axe longitudinal X-X' depuis l'extrémité de liaison 42 de l'anneau de conditionnement vers l'extrémité libre 44 de l'anneau de conditionnement 22, minimise les turbulences liées à l'entrée d'air dans le corps principal 20. Ceci est particulièrement avantageux puisqu'un moteur 12 dont les anneaux de conditionnement 22 minimisent les turbulences a des performances améliorées et génère un bruit réduit.

L'utilisation d'un premier anneau intérieur 24 et d'un deuxième anneau intérieur 26 assure un conditionnement optimisé de l'air en fonction de la position de chaque anneau de conditionnement 22.

La caractéristique selon laquelle l'anneau ou l'un des anneaux 22 est un anneau distinct du corps principal 20 est particulièrement avantageuse puisqu'elle permet par exemple d'installer un anneau de conditionnement sur un moteur existant.

Dans le cas où l'anneau ou l'un des anneaux de conditionnement 22 est venu de matière avec le corps principal 20, l'anneau ou l'un des anneaux de conditionnement 22 peut directement être moulé avec le corps principal 20, ce qui est particulièrement avantageux, puisque ceci permet par exemple de limiter la complexité de production du dispositif de refroidissement 14 et les opérations d'assemblage.

La disposition des passages d'air 30 sur un cylindre primitif et l'utilisation de passages d'air 30 de section constante rendent la fabrication du dispositif de refroidissement 14 simple.

Un corps principal 20 comprenant au moins au moins 4, de préférence au moins 12 passages d'air est particulièrement avantageux puisqu'il permet une bonne distribution de l'air circulant dans le dispositif de refroidissement 14.

Le rapport de la longueur de chaque anneau de conditionnement 22 sur la longueur du corps principal 20 assure un transfert de chaleur suffisant entre le corps principal 20 et l'air circulant dans le corps principal 20, tout en limitant les turbulences à l'entrée et à la sortie du corps principal 20.

Un moteur 12 comportant un ventilateur 19 permet par ailleurs de contrôler le flux d'air circulant au travers du dispositif de refroidissement 14 et améliore les performances de refroidissement du dispositif de refroidissement 14 et ainsi du moteur électrique 12.

## Revendications

1. Moteur électrique (12) pour véhicule, notamment pour un véhicule ferroviaire (10), comprenant :
- un stator (16) d'axe longitudinal (X-X'), et, en périphérie du stator (16),
- un dispositif de refroidissement (14) du moteur (12) comportant un corps principal (20), le corps principal (20) comportant une pluralité de passages d'air (30), chaque passage d'air (30) étant orienté sensiblement parallèlement à l'axe longitudinal (X-X'),
chaque passage d'air définissant deux ouvertures de passage d'air (36) dont une ouverture d'entrée d'air (38) et une ouverture de sortie d'air (40), le dispositif de refroidissement (14) comprenant
- un ou deux anneau(x) de conditionnement (22) d'un flux d'air circulant dans les passages d'air (30), chaque anneau de conditionnement (22) étant placé en regard de l'ensemble des ouvertures d'entrée (38) ou de sortie (40) d'air,
chaque anneau de conditionnement (22) définissant une section de passage du flux d'air, la section de passage étant croissante selon l'axe longitudinal (X-X'), depuis une extrémité de liaison (42) de l'anneau de conditionnement (22) avec le corps principal (20) vers une extrémité libre (44) dudit anneau de conditionnement (22), **caractérisé en ce que** l'anneau (22) ou l'un des anneaux de conditionnement (22) est un premier anneau de conditionnement (24), le premier anneau de conditionnement (24) comprenant un tronçon radialement intérieur (46) et un tronçon radialement extérieur (48), définissant entre eux la section de passage du flux d'air, le tronçon radialement intérieur (46) et le tronçon radialement extérieur (48) comportant chacun une extrémité libre lisse respectivement intérieure (50) et extérieure (54) et une extrémité de liaison ondulée respectivement intérieure (52) et extérieure (56), chaque extrémité de liaison ondulée (52, 56) étant une extrémité de liaison avec le corps principal (20), l'extrémité de liaison ondulée intérieure (52) du tronçon radialement intérieur (46) et l'extrémité de liaison ondulée extérieure (56) du tronçon radialement extérieur (48) épousant partiellement une ouverture (36) de chaque passage d'air (30).

2. Moteur (12) selon la revendication 1, dans lequel l'un des anneaux (22) de conditionnement est un deuxième anneau de conditionnement (26), le deuxième anneau de conditionnement (26) étant un anneau ajouré comprenant une extrémité libre ajourée (64) et une extrémité de liaison ajourée (62), l'extrémité de liaison ajourée (62) étant une extrémité de liaison avec le corps principal (20), des ajours (66) du deuxième anneau de conditionnement (26) étant disposés en regard d'une ouverture de chaque passage d'air (36) et s'élargissant de l'extrémité de liaison ajourée (62) à l'extrémité libre ajourée (64) et dans lequel les ajours (66) définissent la section de passage du flux d'air.

3. Moteur selon la revendication 2, dans lequel le deuxième anneau de conditionnement comprend un support (58) ainsi qu'une pluralité de parois (60), le support (58) ainsi que la pluralité de parois (60) s'étendant entre l'extrémité de liaison ajourée (62) et l'extrémité libre ajourée (64), chaque paroi (60) faisant saillie du support (58) selon une direction radiale par rapport à l'axe longitudinal (X-X') et s'étendant selon la direction longitudinale (X-X'), chaque paroi (60) s'étendant entre deux ouvertures de passage d'air (36) adjacentes, la pluralité de parois (60) définissant les ajours (66).

4. Moteur selon la revendication 3, dans lequel une largeur (lₚ) de chaque paroi, mesurée selon un plan tangent à une face extérieure du support (58), est croissante selon la direction longitudinale (X-X') depuis l'extrémité libre ajourée (64) vers l'extrémité de liaison ajourée (62), chaque paroi (60) faisant de préférence saillie du support sur une hauteur supérieure à la hauteur des passages d'air (30) prise selon la direction radiale par rapport à l'axe longitudinal (X-X').

5. Moteur (12) selon l'une quelconque des revendications précédentes, dans lequel les passages d'air (30) sont disposés sur un cylindre primitif (35) d'axe longitudinal (X-X) et dans lequel les passages d'air (30) sont de section constante tout au long du corps principal (20).

6. Moteur (12) selon l'une quelconque des revendications précédentes, dans lequel le corps principal (20) comprend au moins 4, de préférence au moins 12 passages d'air (30).

7. Moteur (12) selon l'une quelconque des revendications précédentes, dans lequel le rapport selon l'axe longitudinal (X-X') de la longueur du corps principal (20) sur la longueur de chaque anneau (22) de conditionnement est compris entre 5 et 40.

8. Moteur (12) selon l'une quelconque des revendications précédentes, comportant un ventilateur (19) adapté pour déplacer l'air au travers du dispositif de refroidissement (14), en particulier le ventilateur (19) étant fixé sur un arbre du moteur (68).

9. Véhicule, notamment ferroviaire, comportant un moteur (12) pour véhicule selon l'une quelconque des revendications précédentes.

## Patentansprüche

1. Elektromotor (12) für ein Fahrzeug, insbesondere für ein Schienenfahrzeug (10), umfassend:
- einen Stator (16) mit einer Longitudinalachse (X-X'), und, an einem Umfang des Stators (16),
- eine Kühlvorrichtung (14) des Motors (12), welche einen Hauptkörper (20) umfasst, wobei der Hauptkörper (20) eine Mehrzahl von Luftdurchgängen (30) umfasst, wobei jeder Luftdurchgang (30) im Wesentlichen parallel zu der Longitudinalachse (X-X') ausgerichtet ist, wobei jeder Luftdurchgang zwei Luftdurchgangsöffnungen (36) definiert, darunter eine Lufteintrittsöffnung (38) und eine Luftaustrittsöffnung (40), wobei die Kühlvorrichtung (14) umfasst:
- ein oder zwei Konditionierungsringe (22) für einen in den Luftdurchgängen (30) zirkulierenden Luftstrom, wobei jeder Konditionierungsring (22) gegenüber allen Lufteintrittsöffnungen (38) oder Luftaustrittsöffnungen (40) angeordnet ist,
wobei jeder Konditionierungsring (22) einen Durchgangsquerschnitt für den Luftstrom definiert, wobei der Durchgangsquerschnitt entlang der Longitudinalachse (X-X') zunimmt, von einem Verbindungsende (42) des Konditionierungsrings (22) mit dem Hauptkörper (20) zu einem freien Ende (44) des Konditionierungsrings (22), **dadurch gekennzeichnet, dass** der Ring (22) oder einer der Konditionierungsringe (22) ein erster Konditionierungsring (24) ist, wobei der erste Konditionierungsring (24) einen radial inneren Abschnitt (46) und einen radial äußeren Abschnitt (48) umfasst, welche zwischen einander den Durchgangsquerschnitt für den Luftstrom definieren, wobei der radial innere Abschnitt (46) und der radial äußere Abschnitt (48) jeweils ein glattes freies inneres (50) bzw. äußeres (54) Ende und ein gewelltes inneres (52) bzw. äußeres (56) Verbindungsende umfassen, wobei jedes gewellte Verbindungsende (52, 56) ein Verbindungsende mit dem Hauptkörper (20) ist, wobei das gewellte innere Verbindungsende (52) des radial inneren Abschnitts (46) und das gewellte äußere Verbindungsende (56) des radial äußeren Abschnitts (48) teilweise eine Öffnung (36) jedes Luftdurchgangs (30) auskleiden.

2. Motor (12) nach Anspruch 1, wobei einer der Konditionierungsringe (22) ein zweiter Konditionierungsring (26) ist, wobei der zweite Konditionierungsring (26) ein durchbrochener Ring ist, welcher ein durchbrochenes freies Ende (64) und ein durchbrochenes Verbindungsende (62) umfasst, wobei das durchbrochene Verbindungsende (62) ein Verbindungsende mit dem Hauptkörper (20) ist, wobei Durchbrüche (66) des zweiten Konditionierungsrings (26) gegenüber einer Öffnung jedes Luftdurchgangs (36) angeordnet sind und sich von dem durchbrochenen Verbindungsende (62) zu dem durchbrochenen freien Ende (64) hin erweitern und wobei die Durchbrüche (66) den Durchgangsquerschnitt für den Luftstrom definieren.

3. Motor nach Anspruch 2, wobei der zweite Konditionierungsring eine Halterung (58) sowie eine Mehrzahl von Wandungen (60) umfasst, wobei sich die Halterung (58) sowie die Mehrzahl von Wandungen (60) zwischen dem durchbrochenen Verbindungsende (62) und dem durchbrochenen freien Ende (64) erstrecken, wobei jede Wandung (60) bezüglich einer zu der Longitudinalachse (X-X') radialen Richtung von der Halterung (58) vorsteht und sich bezüglich der Longitudinalrichtung (X-X') erstreckt, wobei jede Wandung (60) sich zwischen zwei benachbarten Luftdurchgangsöffnungen (36) erstreckt, wobei die Mehrzahl von Wandungen (60) die Durchbrüche (66) definieren.

4. Motor nach Anspruch 3, wobei eine Breite (lₚ) jeder Wandung, welche in einer Tangentialebene zu einer Außenfläche der Halterung (58) gemessen ist, bezüglich der Longitudinalachse (X-X') von dem durchbrochenen freien Ende (64) zu dem durchbrochenen Verbindungsende (62) zunimmt, wobei jede Wandung (60) vorzugsweise einen Halterungsvorsprung an einer Höhe bildet, welche größer ist als die Höhe der Luftdurchgänge (30), welche bezüglich der radialen Richtung zu der Longitudinalachse (X-X') genommen ist.

5. Motor (12) nach einem der vorhergehenden Ansprüche, wobei die Luftdurchgänge (30) auf einem Primitivzylinder (35) mit der Longitudinalachse (X-X) angeordnet sind und wobei die Luftdurchgänge (30) über den gesamten Hauptkörper (20) hinweg einen konstanten Querschnitt aufweisen.

6. Motor (12) nach einem der vorhergehenden Ansprüche, wobei der Hauptkörper (20) wenigstens 4, vorzugsweise wenigstens 12, Luftdurchgänge (30) umfasst.

7. Motor (12) nach einem der vorhergehenden Ansprüche, wobei das Verhältnis der Länge des Hauptkörpers (20) bezüglich der Longitudinalachse (X-X') zu der Länge jedes Konditionierungsrings (22) zwischen 5 und 40 liegt.

8. Motor (12) nach einem der vorhergehenden Ansprüche, umfassend ein Gebläse (19), welches dazu eingerichtet ist, Luft durch die Kühlvorrichtung (14) zu bewegen, wobei insbesondere das Gebläse (19) an einer Welle des Motors (68) befestigt ist.

9. Fahrzeug, insbesondere Schienenfahrzeug, umfassend einen Motor (12) für ein Fahrzeug nach einem der vorhergehenden Ansprüche.

## Claims

1. Electric motor (12) for a vehicle, in particular for a rail vehicle (10), comprising:
- a stator (16) of longitudinal axis (X-X'), and, at the periphery of the stator (16),
- a cooling device (14) for cooling the motor (12) including a main body (20), the main body (20) including a plurality of air passages (30), each air passage (30) being oriented substantially parallel to the longitudinal axis (X-X'),
each air passage defining two air passage openings (36) including an air inlet opening (38) and an air outlet opening (40),
the cooling device (14) comprising:
- one or two conditioning rings(x) (22) for conditioning an air flow circulating in the air passages (30), each conditioning ring (22) being positioned facing all the air inlet (38) or outlet (40) openings,
each conditioning ring (22) defining a cross-section of passage of the air flow, the passage cross-section being increasing along the longitudinal axis (X-X'), from a connection end (42) of the conditioning ring (22) connecting with the main body (20) to a free end (44) of said conditioning ring (22), **characterised in that** the ring (22) or one of the conditioning rings (22) is a first conditioning ring (24), the first conditioning ring (24) comprising a radially inner section (46) and a radially outer section (48), defining between them the passage cross-section of the air flow, the radially inner section (46) and the radially outer section (48) each including a smooth free end respectively inner (50) and outer (54) and a corrugated connection end respectively inner (52) and outer (56), each corrugated connection end (52, 56) being a connection end for connection with the main body (20), the inner corrugated connection end (52) of the radially inner section (46) and the outer corrugated connection end (56) of the radially outer section (48) partially matching an opening (36) of each air passage (30).

2. Motor (12) according to claim 1, wherein one of the conditioning rings (22) is a second conditioning ring (26), the second conditioning ring (26) being a perforated ring comprising a free perforated end (64) and a perforated connection end (62), the perforated connection end (62) being a connection end for connection with the main body (20), the perforations (66) of the second conditioning ring (26) being disposed facing an opening of each air passage (36) and widening from the perforated connection end (62) to the perforated free end (64) and wherein the perforations (66) define the passage cross-section of the air flow.

3. Motor according to claim 2, wherein the second conditioning ring comprises a support (58) as well as a plurality of walls (60), the support (58) as well as the plurality of walls (60) extending between the perforated connection end (62) and the perforated free end (64), each wall (60) protruding from the support (58) in a radial direction relative to the longitudinal axis (X-X') and extending along the longitudinal direction (X-X'), each wall (60) extending between two adjacent air passage openings (36), the plurality of walls (60) defining the perforations (66).

4. Motor according to claim 3, wherein a width (lₚ ) of each wall, measured along a plane tangent to an outer face of the support (58), is increasing along the longitudinal direction (X-X') from the perforated free end (64) to the perforated connection end (62), each wall (60) preferably protruding from the support over a height greater than the height of the air passages (30) taken along the radial direction relative to the longitudinal axis (X-X').

5. Motor (12) according to any one of the preceding claims, wherein the air passages (30) are disposed on a primitive cylinder (35) with a longitudinal axis (X-X) and wherein the air passages (30) are of constant cross-section all along the main body (20).

6. Motor (12) according to any one of the preceding claims, wherein the main body (20) comprises at least **4,** preferably at least 12 air passages (30).

7. Motor (12) according to any one of the preceding claims, wherein the ratio along the longitudinal axis (X-X') of the length of the main body (20) to the length of each conditioning ring (22) is between 5 and 40.

8. Motor (12) according to any one of the preceding claims, including a fan (19) adapted to move the air through the cooling device (14), in particular the fan (19) being fastened to a motor shaft (68).

9. Vehicle, in particular railway, including a motor (12) for a vehicle according to any one of the preceding claims.
